# EUROPÄISCHE PATENTSCHRIFT

(11) **EP 3 898 137 B1**
(45) Veröffentlichungstag und Bekanntmachung des Hinweises auf die Patenterteilung: **01.03.2023**
(21) Anmeldenummer: 19832646.4
(22) Anmeldetag: 18.12.2019
(51) Int. Cl.: B26D 1/29

(54) **PRESSEINHEIT FÜR PORTIONIERMASCHINE**
PRESS UNIT FOR A PORTIONING MACHINE
UNITÉ PRESSE POUR MACHINE À DIVISER EN PORTIONS

(30) Priorität: 19.12.2018 DE 102018132882
(43) Veröffentlichungstag der Anmeldung: 27.10.2021
(73) Patentinhaber: Poly-clip System GmbH & Co. KG, 65795 Hattersheim (DE)
(72) Erfinder: BERGMANN, Martin, 63768 Hösbach (DE)
(74) Vertreter: Eisenführ Speiser
(86) Internationale Anmeldenummer: PCT/EP2019/086044
(87) Internationale Veröffentlichungsnummer: WO 2020/127549

(56) Entgegenhaltungen:
- EP-A1- 2 532 493
- EP-A2- 2 227 964
- EP-B1- 2 227 964
- WO-A1-2006/123368

## Beschreibung

### GEBIET DER ERFINDUNG

Die vorliegende Erfindung betrifft eine Portioniermaschine zum Unterteilen eines strangförmigen Produkts in Einzelportionen.

### HINTERGRUND

Portioniermaschinen werden beispielsweise verwendet, um strangförmige Produkte, wie Fleischprodukte, insb. Fleischstränge, sowie Fisch-, Geflügel-, Wurstprodukte oder Backwaren in Scheiben zu schneiden, die anschließend als Einzelportionen oder zu Portionen mit mehreren Scheiben verpackt werden. Insbesondere beim Schneiden von Fleischsträngen in Scheiben ist es häufig gewünscht, dass die Scheiben von gleicher Dicke, gleichem Gewicht und gleicher Form sind. Um dies zu erreichen, wird der zu schneidende Fleischstrang in die gewünschte Form gepresst, um eine über seine Länge homogene Konsistenz zu erreichen.

Aus der EP-Patentanmeldung 2 532 493 ist eine Portioniermaschine zum Abschneiden von gewichtsgenauen Portionen von einem strangförmigen Schneidgut bekannt, die zur Aufnahme des Schneidguts einen Formrohrrevolver mit mehreren Formrohren aufweist. Der Formrohrrevolver besteht aus mehreren scheibenförmigen Elementen. Zwischen zwei scheibenförmigen Elementen ist ein weiteres Scheibenelement angeordnet, gegen das ein Stempel das Schneidgut verpresst. Dieses Scheibenelement besitzt einen separaten Antrieb und ist um die Achse des Formrohrrevolvers drehbar.

Eine weitere Portioniervorrichtung zum Unterteilen eines Lebensmittelstücks in Portionen mit vorgegebenen Gewicht oder vorgegebene Dicke ist aus dem EP-Patent 1 445 078 bekannt. Diese Vorrichtung beinhaltet unter anderem eine horizontal ausgerichtete Trommel mit darin angeordneten seitlich offenen Einlegekammern für das zu unterteilende Lebensmittelstück. Zum Verpressen des Lebensmittelstücks in Querrichtung wird ein Pressstempel seitlich in die Einlegekammer eingeführt. In Längsrichtung wird das Lebensmittelstück in Portionierkammern an einem stirnseitigen Ende der Trommel gepresst und eine Portion entsprechend der Größe der Portionierkammer vom Lebensmittelstück abgetrennt.

Mit diesen bekannten Portioniermaschinen ist es möglich, ein strangförmiges Produkt, wie einen Fleischstrang, vor dem Zerteilen in Einzelportionen zumindest in seine Längsrichtung zu verpressen. Jedoch haben die darin vorgeschlagenen Vorrichtungen zum Verpressen des strangförmigen Produkts einen komplizierten Aufbau und erfordern einen entsprechend hohen Steuerungsaufwand. Von Nachteil ist weiterhin, dass bei Verwendung einer Portionierkammer diese vor der nächsten Verwendung geleert werden muss, womit der Produktionsgeschwindigkeit eine zusätzliche Grenze gesetzt wird.

Aufgabe der vorliegenden Erfindung ist es daher, eine Portioniermaschine zum Unterteilen eines strangförmigen Produkts in Einzelportionen vorzuschlagen, die in ihrem Aufbau einfacher gestaltet ist, und die bei geringerem Steuerungsaufwand weiterhin flexibler einsetzbar ist.

### ZUSAMMENFASSUNG DER ERFINDUNG

Erfindungsgemäß wird eine Portioniermaschine zum Unterteilen eines strangförmigen Produkts in Einzelportionen vorgeschlagen. Die Portioniermaschine enthält eine Magazinrevolvereinrichtung zur Aufnahme des strangförmigen Produkts, eine Presseinheit zum Komprimieren des strangförmigen Produkts wenigstens in dessen Längsrichtung, und eine Portionier- und Schneideinrichtung zum Portionieren und Abtrennen von Einzelportionen von dem strangförmigen Produkt. Die Magazinrevolvereinrichtung weist ein Basissegment und ein Revolversegment auf, die zur Bildung wenigstens eines Aufnahmeschachts für das strangförmige Produkt koaxial zueinander ausgerichtete Schachtabschnitte aufweisen, und die zur Positionierung des Aufnahmeschachts in einer Schneidposition um eine gemeinsame Achse drehbar sind. Die Presseinheit zum Komprimieren des strangförmigen Produkts weist wenigstens einen Pressstempel und ein Pressgegenelement auf. Das Pressgegenelement ist ein zwischen dem Basissegment und dem Revolversegment der Magazinrevolvereinrichtung angeordnetes Schieberelement, das zum Freigeben oder Verschließen des Aufnahmeschachts in der Schneidposition zumindest annähernd senkrecht zur Drehachse der Magazinrevolvereinrichtung zwischen einer Freigabeposition und einer Verschließposition reversibel bewegbar ist.

Die Presseinheit, und im Besonderen das Schieberelement kann somit unabhängig vom Drehantrieb der Revolvereinheit angesteuert werden.

Im einfachsten Fall weist das Basissegment der Revolverbasis eine zum Schieberelement korrespondierende Ausnehmung auf, in die das Schieberelement reversibel einschiebbar ist.

Um ein Komprimieren des strangförmigen Produkts zumindest in seiner Längsrichtung möglichst unmittelbar vor dem Portioniervorgang zu erreichen, ist es vorteilhaft, dass der Pressstempel der Presseinheit koaxial zum Aufnahmeschacht in der Schneidposition ausgerichtet ist. Zum Komprimieren des strangförmigen Produkts kann ein einzelner Pressstempel oder es können mehrere, in einem Magazin vorgehaltene Pressstempel vorgesehen sein, die automatisch über einen angetriebenen Wechsler in eine Pressposition gewechselt werden können.

Umfasst die Presseinheit ein zwischen dem Basissegment und dem Revolversegment der Revolverbasis angeordnetes, vorzugsweise flächiges Trennelement, welches gegenüber einem Rahmenelement der Portioniermaschine ortsfest angeordnet ist, kann zudem verhindert werden, dass das strangförmige Produkt beim Einfüllen in die Revolvereinheit durch die Revolvereinheit rutscht. Das Trennelement kann, da es nicht angetrieben wird und lediglich ein Durchrutschen des strangförmigen Produkts verhindern soll, als einfaches Blech ausgestaltet sein.

Weiterhin von Vorteil ist es, wenn das Trennelement eine Ausnehmung im Bereich der Schneidposition aufweist, in die das Schieberelement in seiner Verschließposition eingreift. Hierdurch wird es möglich, das strangförmige Produkt in der Schneidposition sowohl in seine Längsrichtung zu komprimieren, als auch in Einzelportionen zu schneiden. Ein Antreiben der Revolvereinheit zwischen dem Pressvorgang und dem Schneidvorgang kann somit entfallen.

Die Ausnehmung in dem Trennelement kann jede geeignete Form haben, beispielsweise ein Oval oder ein Vieleck. Es muss lediglich sichergestellt werden, dass der Aufnahmeschacht für das strangförmige Produkt in der Schneidposition freigehalten wird. In einer vorteilhaften Ausgestaltung weist das Trennelement eine annähernd rechteckige Ausnehmung auf, und das Schieberelement hat eine hierzu korrespondierende annähernd rechteckige Form. Eine rechteckige Form oder eine ähnliche Form mit zumindest parallelen Seitenkanten ermöglicht bei linearer Führung des Schieberelements ein sicheres Verschließen sowie eine sichere Freigabe des Aufnahmeschachts in der Schneidposition.

Um die Führung des Schieberelements sicherer zu gestalten, kann in einer vorteilhaften Ausgestaltung vorgesehen sein, dass das Trennelement Führungsmittel aufweist, zum Führen des Schieberelements während des reversiblen Verschiebens zum Freigeben oder Verschließen des Aufnahmeschachts in der Schneidposition. Hierbei kann es sich beispielsweise um Führungsnuten in dem Trennelement handeln, in denen das Schieberelement geführt wird.

In einer weiteren vorteilhaften Ausgestaltung ist vorgesehen, dass das Schieberelement zum reversiblen Bewegen zwischen der Freigabeposition und der Verschließposition mit einem Linearantrieb verbunden ist. Durch einen Linearantrieb ist es möglich, das Schieberelement auf dem kürzesten Weg zwischen der Freigabeposition und der Verschließposition zu bewegen, wodurch der Portioniervorgang beschleunigt werden kann.

In einer bevorzugten Ausführung der erfindungsgemäßen Portioniermaschine kann weiterhin eine Transporteinrichtung zum Abtransport der vom strangförmigen Produkt abgetrennten Einzelportionen vorgesehen sein. Mittels der Transporteinrichtung können neben den Einzelportionen auch Gruppen von Einzelportionen gebildet werden, die beispielsweise zu einer Verpackungseinrichtung weiter transportiert werden. Die Transporteinrichtung kann in einer bevorzugten Ausführung durch ein Transportband gebildet sein.

Die erfindungsgemäße Portioniermaschine weist hierzu selbstverständlich eine Steuereinheit auf, die neben der allgemeinen Steuerung auch spezielle Steuerprogramme enthalten kann, um beispielsweise durch eine entsprechende Ansteuerung der Transporteinrichtung vordefinierte oder frei wählbare Gruppen von Einzelportionen zu bilden.

Die Steuereinheit kann beispielsweise den Pressvorgang derart steuern, dass lediglich ein Pressvorgang ausgeführt wird, und dass im Anschluss hieran das komprimierte strangförmige Produkt komplett in Einzelportionen geteilt wird. Es ist aber ebenfalls möglich, den Pressvorgang so zu steuern, dass nach jedem Abtrennen einer Einzelportion vom strangförmigen Produkt ein erneuter Pressvorgang ausgeführt wird. So besteht die Möglichkeit, dass in diesem Fall auch das Schieberelement nach jedem Abtrennen einer Einzelportion vom strangförmigen Produkt zum erneuten Komprimieren des strangförmigen Produkts in die Verschließposition bewegt werden muss.

In einer beispielhaften Ausführung der vorliegenden Erfindung ist das Schieberelement vollflächig ausgebildet und/oder aus Vollmaterial hergestellt. Beispielsweise besitzt das Schieberelement in Verschieberichtung eine größere Dimension (Länge) als quer zur Verschieberichtung (Breite). Des Weiteren kann vorgesehen sein, dass das Schieberelement frei von Durchgangsöffnungen für das strangförmige Produkt gebildet ist.

Gemäß einer beispielhaften Weiterbildung ist das Schieberelement derart dimensioniert und/oder in der Verschließposition derart angeordnet, dass die Mittel-/Rotationsachse der Magazinrevolvereinrichtung das Schieberelement nicht kreuzt. Dabei kann die translatorische Bewegung des Schieberelements derart eingestellt sein, dass das Schieberelement in Drehachsenrichtung der Magazinrevolvereinrichtung höchstens 50 %, höchstens 45 %, höchstens 40 %, höchstens 35 % oder höchstens 30 % des scheibenförmigen Basissegments überdeckt.

In einer weiteren beispielhaften Ausführung der erfindungsgemäßen Portioniermaschine ist das Schieberelement in der Freigabeposition aus der Magazinrevolvereinrichtung herausgezogen. Beispielweise ist das Schieberelement vollständig aus der Magazinrevolvereinrichtung herausgezogen, sodass das Schieberelement das scheibenförmige Basissegment in Drehachsenrichtung der Magazinrevolvereinrichtung nicht überlappt bzw. überdeckt. In einer alternativen Ausführung ist das Schiebeelement in der Freigabeposition nicht vollständig aus der Magazinrevolvereinrichtung herausgezogen, wobei das Schieberelement das Basissegment in dessen Randbereich in Drehachsenrichtung überlappt bzw. überdeckt, wobei gleichzeitig gewährleistet ist, dass das Schieberelement das Produkt zur weiteren Förderung durch die Magazinrevolvereinrichtung freigibt.

In einer weiteren beispielhaften Ausführung der vorliegenden Erfindung ist das Schieberelement in der Freigabeposition derart angeordnet und/oder das Schieberelement derart gestaltet, dass das komprimierte strangförmige Produkt in der Freigabeposition an dem Schieberelement vorbei gelangen kann. Dies bedeutet, dass das komprimierte strangförmige Produkt nach dem Vorpressvorgang selbsttätig unter Einwirkung der Schwerkraft und/oder durch Betätigen des Pressstempels in Richtung der Portionier- und Schneideinrichtung bewegt werden kann, und zwar an dem Schieberelement vorbei. Beispielsweise gelangt das komprimierte strangförmige Produkt an einer in Richtung der Drehachse der Magazinrevolvereinrichtung weisenden stirnseitigen Kante des Schieberelements vorbei, beispielsweise ohne in Kontakt mit dem Schieberelement zu gelangen.

Ein Vorteil der translatorischen Verlagerung des Schieberelements, vor allem gegenüber einer rotatorischen Bewegung, liegt in der erhöhten Produktionsgeschwindigkeit. Dies hängt damit zusammen, dass der Weitertransport des vorgepressten Produkts aufgrund der translatorischen Schieberbewegung deutlich schneller erfolgen kann, als es bei einer rotatorischen Bewegung der Fall ist. Die in den Revolversegmenten vorgesehenen Schachtabschnitte weisen eine herkömmliche längliche Form auf und sind derart in den Revolversegmenten angeordnet, dass die Langseiten im Wesentlichen in Umfangsrichtung der Revolversegmentscheiben orientiert sind. Die Kurzseiten, die jeweils zwei im Wesentlichen gegenüberliegende Langseiten miteinander verbinden, sind im Wesentlichen quer dazu, insbesondere im Wesentlichen in Radialrichtung in Bezug auf die Revolversegmentscheiben orientiert. Somit hat das translatorische Schieberelement beim Hin- und Herbewegen zwischen der Freigabeposition und der Verschließposition lediglich die Kurzseiten freizugeben. Dies bedeutet, dass die Bewegungsamplitude in Abhängigkeit der Kurzseiten eingestellt wird. Dies bedeutet, dass bei der translatorischen Bewegung die Bewegungsamplitude zwischen Verschließposition und Freigabeposition deutlich kleiner ist und folglich die Stellzeit, d. h. diejenige Zeit, die notwendig ist, um den translatorischen Schieber zwischen Verschließ- und Freigabeposition, bzw. umgekehrt, hin und her zu bewegen, deutlich geringer ist.

Gemäß der vorliegenden Erfindung wird weiterhin ein Verfahren zum Steuern einer Portioniermaschine zum Unterteilen eines vorzugsweise strangförmigen Produkts in Einzelportionen vorgeschlagen. Die Portioniermaschine enthält eine Magazinrevolvereinrichtung zur Aufnahme des strangförmigen Produkts, eine Presseinheit zum Komprimieren des strangförmigen Produkts wenigstens in dessen Längsrichtung, und eine Portionier- und Schneideinrichtung zum Portionieren und Abtrennen von Einzelportionen von dem strangförmigen Produkt.

Das Verfahren enthält die Schritte:
- Einlegen eines strangförmigen Produkts in wenigstens einen Aufnahmeschacht der Magazinrevolvereinrichtung;
- Komprimieren des strangförmigen Produkts zumindest in dessen Längsrichtung durch Verschieben eines Pressstempels in den Aufnahmeschacht in Richtung eines in der Verschließposition befindlichen Schieberelements der Presseinheit;
- Bewegen des Schieberelements in eine Freigabeposition nach Beenden des Komprimiervorgangs;
- Verschieben des komprimierten strangförmigen Produkts in Richtung der Portionier- und Schneideinrichtung durch den Pressstempel der Presseinheit; und
- Abtrennen von Einzelportionen von dem komprimierten strangförmigen Produkt durch die Portionier- und Schneideinrichtung.

Entsprechend dem erfindungsgemäßen Verfahren befindet sich der Aufnahmeschacht zum Einlegen des strangförmigen Produkts in einer Aufnahmeposition. Mit anderen Worten wird ein zuvor in der Schneidposition geleerter Aufnahmeschacht in die Aufnahmeposition überführt, um ein weiteres strangförmiges Produkt in diesen einzulegen.

In einem nächsten Schritt entsprechend dem erfindungsgemäßen Verfahren wird der Aufnahmeschacht nach Einlegen eines strangförmigen Produkts in eine Schneidposition bewegt.

Entsprechend dem erfindungsgemäßen Verfahren erfolgt ein portionsweiser Vorschub des komprimierten strangförmigen Produkts durch den Pressstempel nach Beendigen des Komprimiervorgangs.

Weist die Portioniermaschine eine Transporteinrichtung zum Abtransport der vom strangförmigen Produkt abgetrennten Einzelportionen auf, kann das erfindungsgemäße Verfahren den weiteren Schritt des gesteuerten Antreibens der Transporteinheit zum Erzeugen von Einzelportionen oder Gruppen von Einzelportionen enthalten.

Mit dem erfindungsgemäßen Verfahren werden alle im Zusammenhang mit der erfindungsgemäßen Portioniermaschine erläuterten Vorteile verwirklicht.

Ebenfalls im Rahmen der vorliegenden Erfindung und unabhängig von den vorstehend erläuterten erfindungsgemäßen Ausgestaltungen wird eine Magazinrevolvereinrichtung für eine Portioniermaschine zum Unterteilen eines strangförmigen Produkts in Einzelportionen vorgeschlagen. Die Magazinrevolvereinrichtung enthält eine um eine Drehachse drehbare Revolverbasis, die wenigstens einen durch die Revolverbasis hindurchgehenden ersten Schacht aufweist, dessen Schachtachse zumindest annährend parallel zu der Drehachse der Revolverbasis verläuft, und mindestens ein auf der Revolverbasis im Bereich des ersten Schachts reversibel anordenbares erstes Schachtmodul mit nur einem durch das erste Schachtmodul hindurchgehenden Schacht, dessen Schachtachse koaxial zu der Schachtachse des ersten Schachts der Revolverbasis verläuft und dessen Querschnitt dem Querschnitt des wenigstens einen Schachts der Revolverbasis zumindest annähernd entspricht, um einen ersten Aufnahmeschacht für ein strangförmiges Produkt zu bilden.

Eine solche Ausgestaltung ermöglicht die Bereitstellung eines sehr kompakt gestalteten Schachtmoduls zur Bildung eines einzelnen Aufnahmeschachts für das strangförmige Produkt, das einfach und flexibel zu handhaben ist.

In einer bevorzugten Ausgestaltung weist die Revolverbasis wenigstens einen durch die Revolverbasis hindurchgehenden zweiten Schacht auf, dessen Schachtachse zumindest annährend parallel zu der Drehachse der Revolverbasis verläuft. Somit kann auf der Revolverbasis ein weiterer Aufnahmeschacht für das strangförmige Produkt gebildet werden.

In einer weiterhin bevorzugten Ausgestaltung ist vorgesehen, dass auf der Revolverbasis im Bereich des zweiten Schachts ein erstes Schachtmodul zur Bildung eines zweiten Aufnahmeschachts für das strangförmige Produkt reversibel anordenbar ist. Hierdurch ist es möglich, zwei identische Aufnahmeschächte für das strangförmige Produkt auf der Revolverbasis zu bilden.

Es ist weiterhin von Vorteil, wenn in der Revolverbasis mehrere erste und zweite Schächte angeordnet sind. Weiterhin kann vorgesehen sein, dass die ersten Schächte und die zweiten Schächte paarweise identische Querschnitte aufweisen. Das Vorsehen mehrerer identischer Schächte, wie beispielsweise das Vorsehen von paarweise identischen Schächten ermöglicht das gleichzeitige Portionieren eines strangförmigen Produkts, welches sich in einem Schacht befindet, während der hierzu identische, leere Schacht nachgefüllt werden kann.

Weist die Revolverbasis im Bereich des ersten Schachts auf ihrer Seite, die bei auf der Revolverbasis angeordnetem erstem Schachtmodul zu dem ersten Schachtmodul weist, wenigstens einen ersten Verbindungsabschnitt auf, und weist das wenigstens eine erste Schachtmodul auf seiner Seite, die bei auf der Revolverbasis angeordnetem erstem Schachtmodul zu der Revolverbasis weist, mindestens einen ersten Gegenverbindungsabschnitt auf, können der erste Verbindungsabschnitt der Revolverbasis und der erste Gegenverbindungsabschnitt des ersten Schachtmoduls eine form- und/oder kraftschlüssige Verbindung des Schachtmoduls mit der Revolverbasis zur Bildung eines Aufnahmeschachts für das im Wesentlichen strangförmige Produkt ermöglichen.

Um eine form- und/oder kraftschlüssige Verbindung herzustellen, können der erste Verbindungsabschnitt der Revolverbasis und der Gegenverbindungsabschnitt des ersten Schachtmoduls durch komplementäre Geometrie gebildet werden.

In einer vorteilhaften Ausgestaltung ist der erste Verbindungsabschnitt der Revolverbasis eine um den ersten Schacht der Revolverbasis umlaufende Ausnehmung und der erste Gegenverbindungsabschnitt des ersten Schachtmoduls ist ein zur Ausnehmung der Revolverbasis korrespondierender und um den Schacht des ersten Schachtmoduls umlaufender Vorsprung.

Dabei ist es weiterhin von Vorteil, wenn das erste Schachtmodul auf seiner Seite, die bei auf der Revolverbasis angeordnetem erstem Schachtmodul von der Revolverbasis wegweist, mindestens einen zweiten Verbindungsabschnitt aufweist. Der Aufnahmeschacht für das strangförmige Produkt kann somit durch das Aufeinandersetzen mehrerer erster Schachtmodule in seiner Länge angepasst werden.

Selbstverständlich können die Verbindungsabschnitte auch in anderer Weise ausgestaltet sein. So kann ein Verbindungsabschnitt durch eine Bohrung gebildet werden, in die ein entsprechender Bolzen, der den korrespondierenden Verbindungsabschnitt bildet, eingreifen kann.

Sind der erste Verbindungsabschnitt der Revolverbasis und der zweite Verbindungsabschnitt des ersten Schachtmoduls identisch ausgebildet, können die ersten Schachtmodule in beliebiger Reihenfolge und Anzahl aufeinander sowie auf die Revolverbasis aufgesetzt werden.

Die zur Bildung eines Aufnahmeschachts vorgesehenen Schachtmodule können von gleicher Länge sein. Es können aber auch Schachtmodule unterschiedlicher Länge bereitgehalten werden, wodurch eine noch präzisere Längenanpassung des Aufnahmeschachts möglich ist.

In einer weiterhin bevorzugten Ausführung der erfindungsgemäßen Magazinrevolvereinrichtung ist ein zweites Schachtmodul vorgesehen, das auf das erste Schachtmodul oder die Revolverbasis reversibel anordenbar ist und das einen durch das zweite Schachtmodul hindurchgehenden Schacht aufweist, dessen Schachtachse koaxial zu der Schachtachse des ersten Schachtmoduls und/oder den Achsen der ersten oder zweiten Schächte der Revolverbasis verläuft und dessen Querschnitt dem Querschnitt des Schachts des ersten Schachtmoduls zumindest annähernd entspricht, wobei das zweite Schachtmodul auf seiner Seite, die bei auf dem ersten Schachtmodul angeordneten zweiten Schachtmodul von dem ersten Schachtmodul wegweist, eine Arretierausnehmung aufweist. Eine solche Arretierausnehmung ermöglicht es, den durch das Schachtmodul gebildeten Aufnahmeschacht für das strangförmige Produkt an einer geeigneten Halterung zu fixieren, um das Schachtmodul in seiner Position zu stabilisieren. Eine geeignete Halterung kann beispielsweise durch eine sich parallel zum Schachtmodul erstreckende Welle oder Ähnliches gebildet sein.

In einer vorteilhaften Ausgestaltung ist ein im Wesentlichen stabförmiges Arretierungselement vorgesehen, das an seinen Enden zu den Arretierungsausnehmungen der zweiten Schachtmodule korrespondierende Verbindungsabschnitte aufweist. So können, wenn zwei oder mehr Aufnahmeschächte gebildet sind, diese untereinander mittels eines oder mehrerer Arretierungselemente verbunden werden.

Erfindungsgemäß ist weiterhin vorgesehen, dass die Revolverbasis ein Basissegment und ein Revolversegment aufweist, die derart miteinander verbunden sind, dass sie gleichzeitig um die gemeinsame Mittelachse rotierend antreibbar sind.

In weiterhin vorteilhafter Weise kann für den Fall, dass die Revolverbasis zweiteilig ausgebildet ist, vorgesehen sein, dass zwischen dem Basissegment und dem Revolversegment der Revolverbasis eine im Wesentlichen ebene Trenneinheit angeordnet ist. Diese ermöglicht eine exakte Positionierung eines in den Aufnahmeschacht des Schachtmoduls der Magazinrevolvereinrichtung eingelegten strangförmigen Produkts.

Die Trenneinheit kann in unterschiedlicher Weise ausgestaltet werden. Jedoch ist es von Vorteil, wenn die im Wesentlichen ebene Trenneinheit ein zumindest annähernd kreisrundes Blech mit zumindest einer im Bereich eines Schachtabschnitts der Revolverbasis angeordneten Ausnehmung ist. Eine derart ausgebildete Trenneinheit ermöglicht ein sicheres Einfüllen eines strangförmigen Produkts in einen Aufnahmeschacht in einer Füllposition sowie eine Überführung des strangförmigen Produkts zu einer entsprechenden Schneideinrichtung, welche im Bereich eines Aufnahmeschachts in der Schneidposition angeordnet ist.

Die Revolverbasis kann zweiteilig gestaltet sein, in Form eines Basissegments und eines hiermit verbundenen Revolversegments, wodurch die Anordnung einer Trenneinheit zwischen diesen Segmenten möglich ist.

Sollte eine Trenneinheit in der Magazinrevolvereinrichtung nicht notwendig sein, ist es selbstverständlich möglich, dass die Revolverbasis mit dem Basissegment und dem Revolversegment einstückig gefertigt ist.

Entsprechend der vorliegenden Erfindung und unabhängig von den vorstehend erläuterten erfindungsgemäßen Ausgestaltungen wird weiterhin eine Portioniermaschine zum Unterteilen eines vorzugsweise strangförmigen Produkts in Einzelportionen vorgeschlagen, die eine Magazinrevolvereinrichtung entsprechend der vorliegenden Erfindung und eine im Bereich der Revolverbasis angeordnete Schneideinrichtung zum Abtrennen einer Einzelportion von dem in der Magazinrevolvereinrichtung bereitgehaltenen strangförmigen Produkt umfasst.

Die erfindungsgemäße Portioniermaschine bietet alle im Zusammenhang mit der erfindungsgemäßen Magazinrevolvereinrichtung erläuterten Vorteile.

### BESCHREIBUNG DER ZEICHNUNGEN

Ausführungsbeispiele der erfindungsgemäßen Portioniermaschine sowie des ebenfalls erfindungsgemäßen Verfahrens werden anhand der nachfolgenden Zeichnungsfiguren erläutert. Die Begriffe "oben", "unten", "rechts", "links" beziehen sich dabei auf die jeweilige Zeichnungsfigur in ihrer entsprechenden Orientierung.

Es zeigen:
- Fig. 1:: eine Portioniermaschine entsprechend der vorliegenden Erfindung;
- Fig. 2:: ein Ausführungsbeispiel eines erfindungsgemäßen Schieberelements;
- Fig. 3:: ein Ausführungsbeispiel einer erfindungsgemäßen Magazinrevolvereinrichtung; und
- Fig. 4:: ein weiteres Ausführungsbeispiel einer erfindungsgemäßen Magazinrevolvereinrichtung.

### DETAILLIERTE BESCHREIBUNG

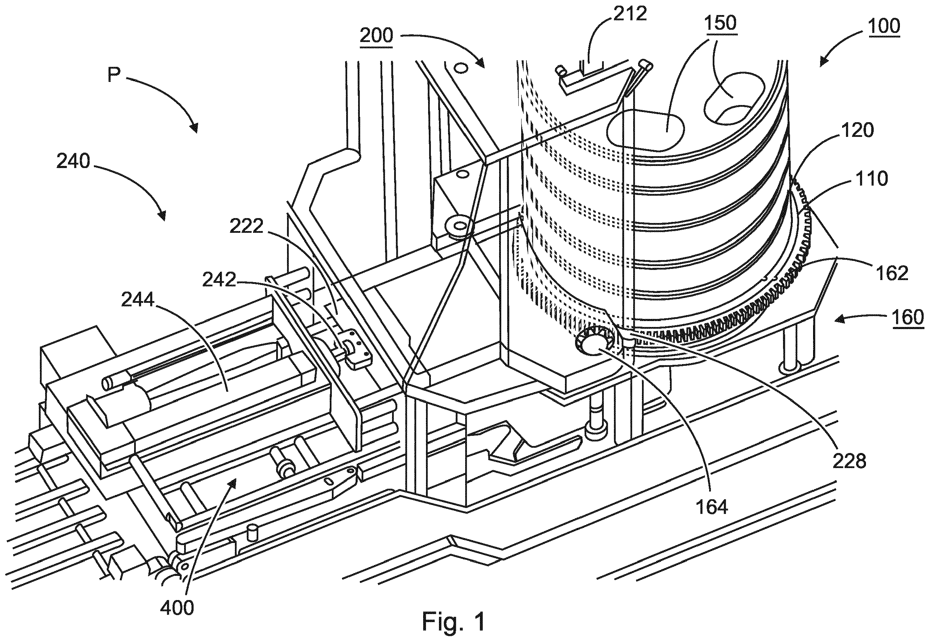

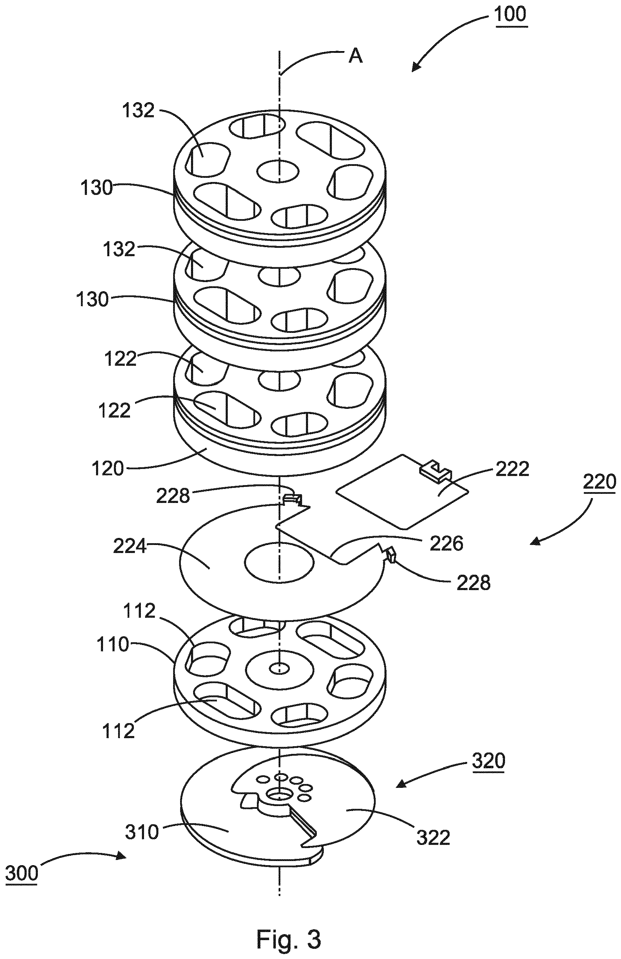

Eine Portioniermaschine P entsprechend der vorliegenden Erfindung, wie sie in Figur 1 gezeigt ist, enthält eine Magazinrevolvereinrichtung 100 zur Aufnahme eines strangförmigen Produkts, eine Presseinheit 200 zum Komprimieren des strangförmigen Produkts und eine Portionier- und Schneideinrichtung 300 zum Portionieren und Abtrennen von Einzelportionen von dem strangförmigen Produkt (vgl. Fig. 3), sowie eine Transportvorrichtung 400 zum Abtransport der Einzelportionen oder Gruppen von Einzelportionen.

Die Magazinrevolvereinrichtung 100 umfasst eine Revolverbasis mit einer Mittelachse A, einem scheibenförmigen Basissegment 110 und einem ebenfalls scheibenförmigen Revolversegment 120, die koaxial zueinander ausgerichtet sind.

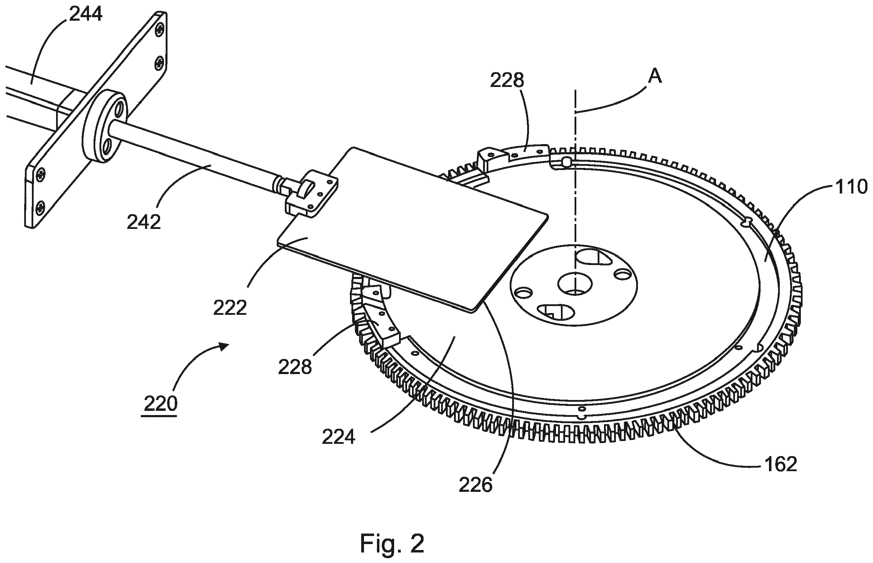

Das Basissegment 110 weist Schachtabschnitte 112 auf, die sich durch das Basissegment 110 erstrecken, und die parallel zur Mittelachse A der Magazinrevolvereinrichtung 100 ausgerichtet sind (vgl. Fig. 2, 3). Die Schachtabschnitte 112 haben einen zumindest annähernd ovalen Querschnitt, die dem strangförmigen Produkt angepasst sind. Gemäß der Ausführung nach Figur 3 sind sechs Schachtabschnitte 112 im Basissegment 110 und entlang des Umfangs so angeordnet, dass jeweils zwei Schachtabschnitte 112 ein Paar bilden und bezüglich einer Mittelachse A der Magazinrevolvereinrichtung 100 einander gegenüberliegen. Dabei weisen die einander gegenüberliegenden Paare von Schachtabschnitten 112 identische Querschnitte auf. Das heißt, die Schachtabschnitte 112 haben paarweise identische Querschnitte, die Querschnitte der Paare von Schachtabschnitten 112 können untereinander aber unterschiedlich sein, sodass insgesamt zwei oder mehr, insbesondere drei Paare von Schachtabschnitten 112 mit unterschiedlichem Querschnitt vorgesehen sein können. Es ist selbstverständlich auch möglich, dass alle Schachtabschnitte 112 des Basissegments 110 identische Querschnitte aufweisen.

Auch das Revolversegment 120 weist Schachtabschnitte 122 auf, die sich durch das Revolversegment 120 erstrecken, und die parallel zur Mittelachse A der Revolverbasis ausgerichtet sind. Wie aus Figur 2 entnommen werden kann, entsprechen die Anordnung und der Querschnitt der Schachtabschnitte 122 in dem Revolversegment 120 der Anordnung und dem Querschnitt der Schachtabschnitte 112 in dem Basissegment 110.

Das Basissegment 110 und das Revolversegment 120 sind so zueinander ausgerichtet, dass Schachtabschnitte 112, 122 mit identischem Querschnitt deckungsgleich übereinander angeordnet sind, und so durchgängige Schachtabschnitte in der Revolverbasis bilden.

Die Magazinrevolvereinrichtung 100 kann um ihre Mittelachse A rotierend angetrieben werden. Hierzu ist ein Antrieb 160 vorgesehen, der ein erstes Antriebselement 162 in Form eines um das Basissegment umlaufenden Zahnkranzes sowie ein zweites Antriebselement 164 in Form eines in den Zahnkranz 162 eingreifenden Ritzels umfasst, welches von einem entsprechenden, nicht dargestellten Motor angetrieben werden kann.

Die Magazinrevolvereinrichtung 100 entsprechend dem Ausführungsbeispiel nach Figur 3 umfasst weitere scheibenförmige Revolversegmente 130 zur Bildung von Aufnahmeschächten 150. Die Revolversegmente 130 können einen identischen Aufbau aufweisen wie das Revolversegment 120. Um einen oder mehrere Aufnahmeschächte 150 mit einer gewünschten Länge zu bilden, können die Revolversegmente 130 in ihrer axialen Länge von der des Revolversegments 120 abweichen. Es ist zudem möglich, Revolversegmente 130 mit unterschiedlichen axialen Längen bereitzustellen, um eine genauere Anpassung der Länge der Aufnahmeschächte 150 zu erreichen. Mit jedem der Revolversegmente 130 werden alle Aufnahmeschächte 150 der Magazinrevolvereinrichtung 100 gleichzeitig gebildet.

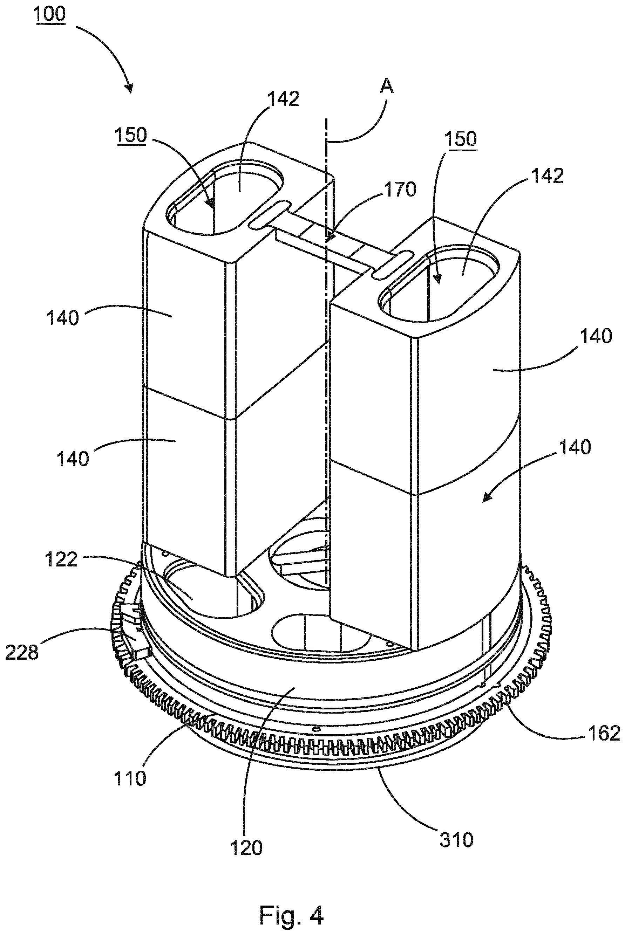

In einer alternativen Ausführung der erfindungsgemäßen Magazinrevolvereinrichtung 100 entsprechend Figur 4 sind zur Bildung von Aufnahmeschächten 150 Schachtmodule 140 vorgesehen. Mittels der Schachtmodule 140 kann ein einzelner Aufnahmeschacht 150 oder, wie in Figur 4 zu sehen ist, mehrere Aufnahmeschächte 150 gebildet werden, beispielsweise als ein bezüglich der Mittellinie A einander gegenüberliegendes Paar von Aufnahmeschächten 150.

Die Presseinheit 200 umfasst einen oberhalb der Magazinrevolvereinrichtung angeordneten Pressstempel, von dem in Figur 1 lediglich die Halterung 212 gezeigt ist. Der Pressstempel besitzt ein austauschbares Stempelelement, dessen Querschnitt dem Querschnitt des Aufnahmeschachts 150 entspricht, in den dieser eingeführt werden soll. Es versteht sich, das zur Anpassung des Pressstempels an den jeweiligen Querschnitt des Aufnahmeschachts 150 ein entsprechendes Stempelelement am Pressstempel angebracht wird. Alternativ hierzu könnte auch der gesamte Pressstempel austauschbar gestaltet sein.

Die Presseinheit 200 umfasst weiterhin eine Gegenpressvorrichtung 220 mit einem Pressgegenelement 222, welches als Schieberelement ausgeführt ist. Das Pressgegenelement oder Schieberelement 222 ist horizontal ausgerichtet und so angeordnet, dass es reversibel zwischen das Basissegment 110 und das Revolversegment 120 der Magazinrevolvereinrichtung 100 geschoben werden kann. Hierzu ist ein Linearantrieb 240 vorgesehen, der entsprechend der Ausführung nach den Figuren 1 und 2 als Kolben/Zylinder-Anordnung ausgeführt ist, mit einem Kolben 242 an dessen freiem Ende das Schieberelement 222 befestigt ist und einem Zylinder 244. Das Schieberelement 222 hat eine im Wesentlichen rechteckige Form und kann bspw. aus Edelstahl oder einem anderen lebensmitteltauglichen Material bestehen. Des Weiteren kann das Schieberelement 222 eine Beschichtung aufweisen, die das Material schützt und/oder zur Lebensmitteltauglichkeit des Schieberelements 222 führt.

Wie weiterhin aus Figur 1 entnommen werden kann, ist die Gegenpressvorrichtung 220 so auf der Portioniermaschine 1 angeordnet, dass das Schieberelement 222, wenn es sich zwischen dem Basissegment 110 und dem Revolversegment 120 befindet, den Aufnahmeschacht 150 verschließt, oberhalb dem sich der Pressstempel 210 befindet, und in den dieser zum Komprimieren des strangförmigen Produkts eintaucht. Dieser Aufnahmeschacht 150 befindet sich in der Schneidposition, wie dies im Weiteren detailliert erläutert wird.

Die Gegenpressvorrichtung 220 umfasst weiterhin ein Trennelement 224 in Form eines Blechs. Das Trennelement 224 ist als annähernd kreisförmiges Flächenelement ausgestaltet, dessen Durchmesser geringfügig kleiner ist als der Durchmesser des Basissegments 110 oder des Revolversegments 120 der Revolverbasis, sodass die Aufnahmeschächte zwischen den Schachtabschnitten 112, 122 des Basissegments 110 und des Revolversegments 120 unterbrochen sind. Das Trennelement 224 weist im Bereich der Schneidposition eine Ausnehmung 226 auf, sodass hier ein durchgängiger Schacht für das strangförmige Produkt erhalten bleibt.

Die Ausnehmung 226 des Trennelements 224 hat eine Größe, die so gewählt ist, dass auch der Aufnahmeschacht 150 mit dem größten Querschnitt in der Schneidposition erhalten bleibt.

Weiterhin entspricht die Form der Ausnehmung 226 im Wesentlichen der Form des Schieberelements 220. Wie aus den Figuren 2 und 3 zu sehen ist, kann die Ausnehmung 226 zumindest annähernd rechteckig sein, und das Schieberelement 222 hat einen Abschnitt mit einer hierzu korrespondierenden rechteckigen Form, um die Ausnehmung 226 im Trennelement 224 zumindest im Bereich der Revolverbasis vollflächig zu verschließen. Hierdurch kann verhindert werden, dass Teile des zu verarbeitenden strangförmigen Produkts während des Pressvorgangs zwischen das Trennelement 224 und das darunterliegende Basissegment 110 der Revolverbasis gelangen.

Das Schieberelement 220 ist, wie in Figur 2 exemplarisch dargestellt, vollflächig ausgebildet und/oder aus Vollmaterial hergestellt. Ferner besitzt das Schieberelement 220 in der beispielhaften Ausführung in Verschieberichtung eine größere Dimension (Länge) als quer zur Verschieberichtung (Breite). Das Schieberelement 220 ist frei von Durchgangsöffnungen für das strangförmige Produkt gebildet.

Des Weiteren ist aus Figur 2 ersichtlich, dass das Schieberelement 220 in der Verschließposition die Mittel-/Rotationsachse A der Magazinrevolvereinrichtung 100 nicht kreuzt. Mit anderen Worten ist die translatorische Bewegung des Schieberelements 220 so eingestellt sein, dass das Schieberelement 220 in Drehachsenrichtung A der Magazinrevolvereinrichtung 100 höchstens 50 %, höchstens 45 %, höchstens 40 %, höchstens 35 % oder höchstens 30 % des scheibenförmigen Basissegments 110 überdeckt.

In einer weiteren beispielhaften Ausführung der erfindungsgemäßen Portioniermaschine ist das Schieberelement 220 in der Freigabeposition aus der Magazinrevolvereinrichtung herausgezogen. Beispielweise ist das Schieberelement vollständig aus der Magazinrevolvereinrichtung herausgezogen, sodass das Schieberelement das scheibenförmige Basissegment in Drehachsenrichtung der Magazinrevolvereinrichtung nicht überlappt bzw. überdeckt. In einer alternativen Ausführung ist das Schiebeelement in der Freigabeposition nicht vollständig aus der Magazinrevolvereinrichtung herausgezogen, wobei das Schieberelement das Basissegment in dessen Randbereich in Drehachsenrichtung überlappt bzw. überdeckt, wobei gleichzeitig gewährleistet ist, dass das Schieberelement das Produkt zur weiteren Förderung durch die Magazinrevolvereinrichtung freigibt.

Um zu gewährleisten, dass das Trennelement 224 mit seiner Ausnehmung 226 in der Schneidposition gesichert ist, während die Magazinrevolvereinrichtung 100 um die Mittelachse A gedreht wird, um einen Aufnahmeschacht 150 mit einem darin aufgenommenen strangförmigen Produkt aus der Befüllposition in die Schneidposition zu bewegen, sind an dem Trennelement 224 zwei Rastelemente 228 vorgesehen. Die Rastelemente 228 stehen im Eingriff mit einem ortsfesten Rahmenelement der Portioniermaschine.

In der Explosionsansicht gemäß Figur 3, welche die Freigabeposition des Schieberelements 220 darstellt, ist gezeigt, dass das komprimierte strangförmige Produkt P an dem Schieberelement 220 vorbei in Richtung des Basissegments 210 gelangen kann. Dies bedeutet, dass das komprimierte strangförmige Produkt P nach dem Vorpressvorgang selbsttätig unter Einwirkung der Schwerkraft und/oder durch Betätigen des (nicht dargestellten) Pressstempels in Richtung der Portionier- und Schneideinrichtung 300 bewegt werden kann, und zwar an dem Schieberelement 200 vorbei. Beispielsweise gelangt das komprimierte strangförmige Produkt P an einer in Richtung der Drehachse A der Magazinrevolvereinrichtung 100 weisenden stirnseitigen Kante des Schieberelements 200 vorbei, beispielsweise ohne in Kontakt mit dem Schieberelement 200 zu gelangen.

Um ein strangförmiges Produkt in Portionen oder Scheiben von vorzugsweise gleicher Dicke oder gleichem Gewicht zu schneiden, ist unterhalb der Magazinrevolvereinrichtung 100 eine Portionier- und Schneideinrichtung 300 angeordnet.

Die Portionier- und Schneideinrichtung 300 umfasst eine Portionierscheibe 310, die unterhalb des Basissegments 110 und parallel hierzu angeordnet ist. Der Abstand zwischen der Oberseite der Portionierscheibe 310 und der Unterseite des Basissegments 110 entspricht der gewünschten Dicke der Einzelportion, und kann durch Verschieben der Portionierscheibe 310 entlang der Mittelachse A eingestellt werden. Im Bereich der Schneidposition weist die Portionierscheibe 310 eine Öffnung auf, durch die die vom strangförmigen Produkt abgetrennte Einzelportion nach unten abgeführt werden kann, um beispielsweise auf der unterhalb der Portionier- und Schneideinrichtung 300 angeordneten Transporteinrichtung 400 abtransportiert zu werden.

Die Portionier- und Schneideinrichtung 300 umfasst weiterhin eine Schneidvorrichtung 320 mit einem Messer 322. Das Messer 322 ist als Rotationsmesser ausgestaltet und an der Unterseite des Basissegments 110 so angeordnet, dass es um die Mittelachse A rotierend antreibbar ist. Das Messer 322 trennt bei einer Umdrehung um 360° um die Mittelachse A einen aus dem unteren Ende des Aufnahmeschachts 150 und sich bis zur Portionierscheibe 310 erstreckenden Abschnitt des strangförmigen Produkts vom übrigen Strang.

Um ein strangförmiges Produkt in Portionen oder Scheiben von vorzugsweise gleicher Dicke oder gleichem Gewicht zu schneiden, wird zunächst der Abstand zwischen der Portionierscheibe 310 und dem Basissegment 110 entsprechend der gewünschten Dicke der Scheibe eingestellt.

Je nach Länge des zu schneidenden strangförmigen Produkts werden zur Bildung der Aufnahmeschächte 150 ein oder mehrere Revolversegmente 130 auf das Revolversegment 120 der Revolverbasis aufgesetzt. Zur Ausrichtung und Sicherung der Revolversegmente 130 untereinander und zum Revolversegment 120 der Revolverbasis können Verbindungs- und Sicherungselemente vorgesehen sein. Solche Verbindungs- und Sicherungselemente können als Bolzen ausgeführt sein, die sich parallel zur Mittelachse A durch alle Revolversegmente 120, 130 erstrecken und diese gegeneinander verspannen. Es können aber auch an jedem Revolversegment 120, 130 separate Verbindungs- und Sicherungselemente vorgesehen sein.

In der alternativen Ausführung der Magazinrevolvereinrichtung 100 nach Figur 4 werden zur Bildung eines Aufnahmeschachts 150 ein einzelnes Schachtmodul 140 oder eine entsprechende Anzahl an Schachtmodulen 140 mittels Verbindungsabschnitten mit dem Revolversegment 120 sowie den weiteren Schachtmodulen 140 untereinander verbunden. In dieser Ausführung können die Aufnahmeschächte 150 durch Anbringen eines Arretierungselements 170 an den oberen Enden der Aufnahmeschächte 150 stabilisiert werden.

Das zu schneidende strangförmige Produkt wird zunächst in den Aufnahmeschacht 150 eingeführt, der sich in der Befüllposition befindet. Die Befüllposition ist die Position eines Aufnahmeschachts 150 gegenüber der Gegenpresseinrichtung 220. In der Portioniermaschine entsprechend Figur 1 befindet sich die Befüllposition an deren rechter Seite.

Anschließend wird die Magazinrevolvereinrichtung 100 um 180° um die Mittelachse A gedreht, so dass der befüllte Aufnahmeschacht 150 von der Mittelachse A aus in Richtung der Gegenpresseinrichtung 220 weist. Er befindet sich somit in der Schneidposition.

Bevor der befüllte Aufnahmeschacht 150 aus der Befüllposition in die Schneidposition überführt wird, wird das Schieberelement 222 der Gegenpresseinrichtung 220 in die in Figur 2 dargestellte Verschließposition bewegt, in der der Aufnahmeschacht 150 zwischen den Schachtabschnitten 112, 122 des Basissegments 110 und des Revolversegments 120 durch das Schieberelement 222 unterbrochen ist.

Befindet sich der befüllte Aufnahmeschacht 150 in der Schneidposition, wird der Pressstempel in den Aufnahmeschacht 150 eingefahren, wobei das strangförmige Produkt durch den Pressstempel gegen das Schieberelement 222 gepresst und dabei in gewünschter Weise komprimiert wird.

Ist der gewünschte Grad der Komprimierung des strangförmigen Produkts erreicht, hat das strangförmige Produkt also beispielsweise einen gewünschten Querschnitt, z.B. entsprechend dem Querschnitt des Aufnahmeschacht 150, wird das Schieberelement 222 durch den Linearantrieb 240 in radiale Richtung aus der Revolvereinheit 100 herausgezogen, und so in die Freigabeposition (vgl. Fig. 3) gebracht. Hierdurch wird der Aufnahmeschacht 150 zwischen den Schachtabschnitten 112,122 des Basissegments 110 und des Revolversegments 120 freigegeben.

Das komprimierte strangförmige Produkt kann jetzt entweder selbstständig durch Schwerkraft oder durch entsprechendes Betätigen des Pressstempels soweit in Richtung der Portionier- und Schneideinrichtung 300 bewegt werden, dass das untere Ende des strangförmigen Produkts an der Portionierscheibe 310 anliegt. Durch Betätigen des Messers 322 wird anschließend eine Einzelportion in Form einer Scheibe von dem strangförmigen Produkt abgetrennt und kann durch die Ausnehmung in der Portionierscheibe 310 auf die darunter befindliche Transporteinrichtung 400 fallen.

Ein weiterer Vorschub des strangförmigen Produkts in Richtung der Portionier- und Schneideinrichtung 300 kann durch Schwerkraft erfolgen, oder durch schrittweisen Vorschub des Pressstempels.

Die Transporteinrichtung 400 kann beispielsweise als Transportband ausgestaltet sein, und kann durch die Steuerung der Portioniermaschine P so angesteuert werden, dass jede Einzelportion oder Scheibe als separate Portion abtransportiert wird, oder dass mehrere Einzelportionen oder Scheiben übereinander oder gefächert abgelegt werden, um als Gesamtportion abtransportiert und verpackt werden zu können.

Während das strangförmige Produkt, welches sich im Aufnahmeschacht 150 in der Schneidposition befindet, komprimiert und in Einzelportionen geschnitten wird, kann gleichzeitig in dem gegenüberliegenden Aufnahmeschacht 150, der sich in der Befüllposition befindet, ein weiteres strangförmiges Produkt eingelegt werden, um anschließend in die Schneidposition überführt und dort in der vorbeschriebenen Weise verarbeitet werden zu können.

Für den Fall, dass unmittelbar nach dem aktuell verarbeiteten strangförmigen Produkt ein hiervon verschiedenes strangförmiges Produkt verarbeitet werden soll, ist es bei Verwendung einer Magazinrevolvereinrichtung 100 entsprechend Figur 3 ebenfalls möglich, einen der anderen Aufnahmeschächte zu befüllen, die sich beispielsweise rechts oder links neben dem Aufnahmeschacht 150 in der Befüllposition befinden. Ein solches Vorgehen ist prinzipiell deshalb möglich, da das Trennelement 224 der Gegenpresseinrichtung 220 alle Aufnahmeschächte 150 der Magazinrevolvereinrichtung 100 verschließt, mit Ausnahme des Aufnahmeschachts 150 in der Schneidposition.

Im Zusammenhang mit den Figuren 3 und 4 wurden zwei unterschiedliche Ausführungsbeispiele einer erfindungsgemäßen Magazinrevolvereinrichtung 100 beschrieben. Bezüglich der Ausführung der Magazinrevolvereinrichtung 100 entsprechend Figur 3 ist anzumerken, dass das Antriebselement 162 am Basissegment 110 der Revolverbasis nicht dargestellt ist, dass ein solches Antriebselement aber prinzipiell vorhanden sein muss, für den Fall, dass die Revolvereinheit 100 um ihre Mittelachse A rotierend antreibbar sein soll.

Zu den Ausführungsbeispielen der Figuren 3 und 4 ist weiterhin anzumerken, dass sich diese im Wesentlichen dadurch unterscheiden, dass die Aufnahmeschächte 150 oberhalb der Revolverbasis durch Revolversegmente 130 (Fig. 3) oder durch Schachtmodule 140 (Fig. 4) gebildet werden. Bei Verwendung von Revolversegmenten 130 werden gleichzeitig alle Aufnahmeschächte 150 gebildet, während bei der Verwendung von Schachtmodulen 140 nur jeweils ein Aufnahmeschacht 150 entsteht. Weiterhin ist anzumerken, dass die Revolverbasis der Ausführungen der Revolvereinheit 100 nach den Figuren 3 und 4 im Wesentlichen identisch ist, sodass zur Bildung der Aufnahmeschächte 150 bei gleicher Revolverbasis die Revolversegmente 130 oder die Schachtmodele 140 alternativ verwendet werden können.

Wie in den Figuren 2 und 3 zu sehen ist, besitzt das Schieberelement 222 an seiner in Richtung der Magazinrevolvereinrichtung 100 weisenden Seite einen Abschnitt, dessen Form der Form der Ausnehmung 226 in dem Trennelement 224 entspricht, um diese in der Verschließposition vollflächig auszufüllen. Der aus der Magazinrevolvereinrichtung 100 überstehende Teil des Schieberelements 222 kann dagegen jede beliebige Form haben. Wesentlich ist, dass dieser Teil des Schieberelements 222 zum Verbinden mit dem Kolben 242 des Linearantriebs 240 geeignet sein muss.

Das Schieberelement 222 wird entsprechend der Ausführungsbeispiele der Figuren 1 bis 4 mittels eines Linearantriebs reversibel aus der Verschließposition in die Freigabeposition bewegt. Für diese Bewegung können aber auch andere geeignete Antriebe verwendet werden. Der im Zusammenhang mit der Gegenpresseinrichtung 220 erläuterte Linearantrieb 240 kann auch durch einen anderen als den dargestellten Kolben-/Zylinderantrieb ausgeführt sein. Ein solcher Antrieb kann beispielsweise eine Zahnstange oder eine Gewindespindel umfassen, die eine lineare Bewegung des Schieberelements 222 ermöglichen. Außerdem kann der Antrieb des Schieberelements 222 ein pneumatischer, hydraulischer oder elektrischer Antrieb sein.

### BEZUGSZEICHENLISTE

- A: Mittelachse
- P: Portioniermaschine
- 100: Magazinrevolvereinrichtung
- 110: Basissegment
- 112: Schachtabschnitte
- 120: Revolversegment
- 122: Schachtabschnitte
- 130: Revolversegmente
- 140: Schachtmodule
- 150: Aufnahmeschächte
- 160: Antrieb
- 162: Zahnkranz
- 164: Ritzel
- 170: Arretierelement
- 200: Presseinheit
- 210: Pressstempel
- 212: Halter
- 220: Gegenpressvorrichtung
- 222: Schieberelement
- 224: Trennelement
- 226: Ausnehmung
- 228: Rastelemente
- 240: Linearantrieb
- 242: Kolben
- 144: Zylinder
- 300: Portionier- und Schneideinrichtung
- 310: Portionierscheibe
- 320: Schneidvorrichtung
- 322: Messer
- 400: Transportvorrichtung

## Patentansprüche

1. Portioniermaschine (P) zum Unterteilen eines strangförmigen Produkts in Einzelportionen, die Portioniermaschine (P) enthaltend:
eine Magazinrevolvereinrichtung (100) zur Aufnahme des strangförmigen Produkts, eine Presseinheit (200) zum Komprimieren des strangförmigen Produkts wenigstens in dessen Längsrichtung, und eine Portionier- und Schneideinrichtung (300) zum Portionieren und Abtrennen von Einzelportionen von dem strangförmigen Produkt;
wobei die Magazinrevolvereinrichtung (100) ein Basissegment (110) und ein Revolversegment (120) aufweist, die zur Bildung wenigstens eines Aufnahmeschachts (150) für das strangförmige Produkt koaxial zueinander ausgerichtete Schachtabschnitte (112, 122) aufweisen, und die zur Positionierung des Aufnahmeschachts (150) in einer Schneidposition um eine gemeinsame Achse (A) drehbar sind; und wobei die Presseinheit (200) zum Komprimieren des strangförmigen Produkts wenigstens einen Pressstempel und ein Pressgegenelement (222) aufweist;
**dadurch gekennzeichnet, dass** das Pressgegenelement (222) ein zwischen dem Basissegment (110) und dem Revolversegment (120) der Magazinrevolvereinrichtung (100) angeordnetes Schieberelement (222) ist, und das zum Freigeben oder Verschließen des Aufnahmeschachts (150) in der Schneidposition zumindest annähernd senkrecht zur Drehachse (A) der Magazinrevolvereinrichtung (100) zwischen einer Freigabeposition und einer Verschließposition reversibel bewegbar ist.

2. Portioniermaschine nach Anspruch 1,
wobei der Pressstempel der Presseinheit (200) koaxial zum Aufnahmeschacht (150) in der Schneidposition ausgerichtet ist.

3. Portioniermaschine nach Anspruch 1 oder 2,
wobei die Presseinheit (200) ein zwischen dem Basissegment (110) und dem Revolversegment (120) der Magazinrevolvereinrichtung (100) angeordnetes, vorzugsweise flächiges Trennelement (224) aufweist, welches gegenüber einem Rahmenelement der Portioniermaschine (1) ortsfest angeordnet ist.

4. Portioniermaschine nach Anspruch 3,
wobei das Trennelement (224) eine Ausnehmung (226) im Bereich der Schneidposition aufweist, in die das Schieberelement (222) in seiner Verschließposition eingreift.

5. Portioniermaschine nach einem der Ansprüche 1 bis 4,
wobei das Trennelement (224) Führungsmittel zum Führen des Schieberelements (222) während des reversiblen Verschiebens zum Freigeben oder Verschließen des Aufnahmeschachts (150) in der Schneidposition aufweist.

6. Portioniermaschine nach einem der Ansprüche 1 bis 5,
wobei das Schieberelement (222) zum reversiblen Bewegen zwischen der Freigabeposition und der Verschließposition mit einem Linearantrieb (240) verbunden ist.

7. Portioniermaschine nach einem der Ansprüche 1 bis 6,
wobei eine Transporteinrichtung (400) zum Abtransport der vom strangförmigen Produkt abgetrennten Einzelportionen vorgesehen ist.

8. Portioniermaschine nach einem der Ansprüche 1 bis 7,
wobei das Schieberelement (222) vollflächig gebildet ist.

9. Portioniermaschine nach einem der Ansprüche 1 bis 8,
wobei das Schieberelement (222) in der Freigabeposition aus der Magazinrevolvereinrichtung (100) herausgezogen ist.

10. Portioniermaschine nach einem der Ansprüche 1 bis 9,
wobei das Schieberelement (222) in der Freigabeposition derart angeordnet ist und/oder das Schieberelement (222) derart gestaltet ist, dass das komprimierte strangförmige Produkt in der Freigabeposition an dem Schieberelement (222) vorbei gelangen kann.

11. Verfahren zum Steuern einer Portioniermaschine (P) nach einem der Ansprüche 1 bis 10, zum Unterteilen eines vorzugsweise strangförmigen Produkts in Einzelportionen, die Portioniermaschine (1) enthält eine Magazinrevolvereinrichtung (100) zum Aufnehmen des strangförmigen Produkts, eine Presseinheit (200) zum Komprimieren des strangförmigen Produkts wenigstens in dessen Längsrichtung, und eine Portionier- und Schneideinrichtung (300) zum Portionieren und Abtrennen von Einzelportionen von dem strangförmigen Produkt, enthaltend die Schritte:
Einlegen eines strangförmigen Produkts in wenigstens einen Aufnahmeschacht (150) der Magazinrevolvereinrichtung (100);
Komprimieren des strangförmigen Produkts zumindest in dessen Längsrichtung durch Verschieben eines Pressstempels in den Aufnahmeschacht (150) in Richtung eines in der Verschließposition befindlichen Schieberelements (222) der Presseinheit (200);
Bewegen des Schieberelements (222) in eine Freigabeposition nach Beenden des Komprimiervorgangs;
Verschieben des komprimierten strangförmigen Produkts in Richtung der Portionier- und Schneideinrichtung (300) durch den Pressstempel der Presseinheit (200);
Abtrennen von Einzelportionen von dem komprimierten strangförmigen Produkt durch die Portionier- und Schneideinrichtung (300).

12. Verfahren nach Anspruch 11,
wobei sich der Aufnahmeschacht (150) zum Einlegen des strangförmigen Produkts in einer Aufnahmeposition befindet.

13. Verfahren nach Anspruch 12,
wobei der Aufnahmeschacht (150) nach Einlegen eines strangförmigen Produkts in eine Schneidposition bewegt wird.

14. Verfahren nach Anspruch 11,
weiter enthaltend den Schritt: portionsweiser Vorschub des komprimierten strangförmigen Produkts durch den Pressstempel (210) nach Beendigen des Komprimiervorgangs.

15. Verfahren nach Anspruch 11,
wobei die Portioniermaschine (P) eine Transporteinrichtung (400) enthält, zum Abtransport der vom strangförmigen Produkt abgetrennten Einzelportionen;
weiter enthaltend den Schritt: gesteuertes Antreiben der Transporteinheit (400) zum Erzeugen von Einzelportionen oder Gruppen von Einzelportionen.

## Claims

1. A portioning machine (P) for dividing a strand-shaped product into individual portions, the portioning machine (P) comprising:
a magazine turret device (100) for receiving the strand-shaped product, a pressing unit (200) for compressing the strand-shaped product at least in its longitudinal direction, and a portioning and cutting device (300) for portioning and separating individual portions from the strand-shaped product;
wherein the magazine turret device (100) comprises a base segment (110) and a turret segment (120), which comprise mutually coaxially aligned chute sections (112, 122) for forming at least one receiving chute (150) for the strand-shaped product, and which are rotatable about a common axis (A) for positioning the receiving chute (150) in a cutting position; and wherein the pressing unit (200) comprises at least one pressing plunger and a pressing counter element (222) for compressing the strand-shaped product;
**characterized in that** the pressing counter element (222) is a sliding element (222) arranged between the base segment (110) and the turret segment (120) of the magazine turret device (100), and which is reversibly movable between a release position and a closing position for releasing or closing the receiving chute (150) in the cutting position, in a direction at least approximately perpendicular to the axis of rotation (A) of the magazine turret device (100).

2. The portioning machine according to claim 1,
wherein the pressing plunger of the pressing unit (200) is aligned coaxially with the receiving chute (150) in the cutting position.

3. The portioning machine according to claim 1 or 2,
wherein the pressing unit (200) has a preferably planar separating element (224) which is arranged between the base segment (110) and the turret segment (120) of the magazine turret device (100), and which is arranged stationary relative to a frame element of the portioning machine (1).

4. The portioning machine according to claim 3,
wherein the separating element (224) has a recess (226) in the region of the cutting position, into which the sliding element (222) engages in its closed position.

5. The portioning machine according to one of claims 1 to 4,
wherein the separating element (224) comprises guide means for guiding the sliding element (222) during the reversible displacement for releasing or closing the receiving chute (150) in the cutting position.

6. The portioning machine according to one of claims 1 to 5,
wherein the sliding element (222) is connected to a linear drive (240) for reversible movement between the release position and the closing position.

7. The portioning machine according to one of claims 1 to 6,
wherein a transport device (400) is provided for transporting away the individual portions separated from the strand-shaped product.

8. The portioning machine according to one of claims 1 to 7,
wherein the sliding element (222) is formed over the entire surface.

9. The portioning machine according to one of claims 1 to 8,
wherein the sliding element (222) in the release position is pulled out of the magazine turret device (100).

10. The portioning machine according to one of claims 1 to 9,
wherein the sliding element (222) is arranged in the release position and/or the sliding element (222) is configured such that the compressed strand-shaped product can pass the sliding element (222) in the release position.

11. A method for controlling a portioning machine (P) according to one of claims 1 to 10, for dividing a preferably strand-shaped product into individual portions, the portioning machine (1) comprising a magazine turret device (100) for receiving the strand-shaped product, a pressing unit (200) for compressing the strand-shaped product at least in its longitudinal direction, and a portioning and cutting device (300) for portioning and separating individual portions from the strand-shaped product, comprising the steps of:
inserting a strand-shaped product into at least one receiving chute (150) of the magazine turret device (100);
compressing the strand-shaped product at least in its longitudinal direction by displacing a pressing plunger into the receiving chute (150) in the direction of a sliding element (222) of the pressing unit (200) located in the closing position;
moving the sliding element (222) into a release position after completion of the compression process;
displacing the compressed strand-shaped product in the direction of the portioning and cutting device (300) by the pressing plunger of the pressing unit (200);
separating individual portions from the compressed strand-shaped product by the portioning and cutting device (300).

12. The method according to claim 11,
wherein the receiving chute (150) is in a receiving position for inserting the strand-shaped product.

13. The method according to claim 12,
wherein the receiving chute (150) is moved to a cutting position after inserting a strand-shaped product.

14. The method according to claim 11,
further comprising the step of: advancing the compressed strand-shaped product in portions through the compression plunger (210) after completion of the compressing operation.

15. The method according to claim 11,
wherein said portioning machine (P) includes a transport device (400), for transporting away the individual portions separated from the strand-shaped product;
further comprising the step of: controllably driving said transport unit (400) for producing single portions or groups of single portions.

## Revendications

1. Machine à diviser en portions (P) pour diviser un produit en forme de boyau en portions individuelles, la machine à diviser en portions (P) contenant :
un dispositif de revolver de magasin (100) pour recevoir le produit en forme de boyau, une unité presse (200) pour comprimer le produit en forme de boyau au moins dans sa direction longitudinale, et un dispositif de division en portions et de coupe (300) pour diviser en portions et séparer des portions individuelles du produit en forme de boyau ;
dans laquelle le dispositif de revolver de magasin (100) présente un segment de base (110) et un segment de revolver (120) qui présentent des sections de logement (112, 122) orientées coaxialement l'une par rapport à l'autre pour former au moins un logement de réception (150) pour le produit en forme de boyau, et qui peuvent tourner autour d'un axe commun (A) pour positionner le logement de réception (150) dans une position de coupe ; et dans laquelle l'unité presse (200) pour comprimer le produit en forme de boyau présente au moins un poinçon de presse et un élément de contre-pression (222) ;
**caractérisée en ce que** l'élément de contre-pression (222) est un élément coulissant (222) disposé entre le segment de base (110) et le segment de révolver (120) du dispositif de révolver de magasin (100), et qui peut être déplacé de manière réversible pour libérer ou fermer le logement de réception (150) dans la position de coupe au moins approximativement perpendiculairement à l'axe de rotation (A) du dispositif de révolver de magasin (100) entre une position de libération et une position de fermeture.

2. Machine à diviser en portions selon la revendication 1,
dans laquelle le poinçon de presse de l'unité presse (200) est aligné coaxialement avec le logement de réception (150) dans la position de coupe.

3. Machine à diviser en portions selon la revendication 1 ou 2,
dans laquelle l'unité presse (200) présente un élément de séparation (224), de préférence plat, disposé entre le segment de base (110) et le segment de révolver (120) du dispositif de révolver de magasin (100), lequel est disposé de manière fixe par rapport à un élément de cadre de la machine à diviser en portions (1).

4. Machine à diviser en portions selon la revendication 3,
dans laquelle l'élément de séparation (224) présente un évidement (226) dans la zone de la position de coupe, dans lequel s'engage l'élément coulissant (222) dans sa position de fermeture.

5. Machine à diviser en portions selon l'une des revendications 1 à 4,
dans laquelle l'élément de séparation (224) présente des moyens de guidage pour guider l'élément coulissant (222) pendant le déplacement réversible pour libérer ou fermer le logement de réception (150) dans la position de coupe.

6. Machine à diviser en portions selon l'une des revendications 1 à 5,
dans laquelle l'élément coulissant (222) est relié à un entraînement linéaire (240) pour le déplacement réversible entre la position de libération et la position de fermeture.

7. Machine à diviser en portions selon l'une des revendications 1 à 6,
dans laquelle un dispositif de transport (400) est prévu pour l'évacuation des portions individuelles séparées du produit en forme de boyau.

8. Machine à diviser en portions selon l'une des revendications 1 à 7,
dans laquelle l'élément coulissant (222) est formé sur toute sa surface.

9. Machine à diviser en portions selon l'une des revendications 1 à 8,
dans laquelle l'élément coulissant (222) est retiré du dispositif de revolver de magasin (100) dans la position de libération.

10. Machine à diviser en portions selon l'une des revendications 1 à 9,
dans laquelle l'élément coulissant (222) est disposé dans la position de libération et/ou l'élément coulissant (222) est configuré de telle sorte que le produit en forme de boyau comprimé peut passer l'élément coulissant (222) dans la position de libération.

11. Procédé de commande d'une machine à diviser en portions (P) selon l'une des revendications 1 à 10, pour diviser un produit, de préférence en forme de boyau, en portions individuelles, la machine à diviser en portions (1) contenant un dispositif de révolver de magasin (100) pour recevoir le produit en forme de boyau, une unité presse (200) pour comprimer le produit en forme de boyau au moins dans sa direction longitudinale, et un dispositif de division en portions et de coupe (300) pour diviser en portions et séparer des portions individuelles du produit en forme de boyau, contenant les étapes consistant à :
introduire un produit en forme de boyau dans au moins un logement de réception (150) du dispositif de revolver de magasin (100) ;
comprimer le produit en forme de boyau au moins dans sa direction longitudinale en déplaçant un poinçon de presse dans le logement de réception (150) en direction d'un élément coulissant (222) de l'unité presse (200) qui se trouve dans la position de fermeture ;
déplacer l'élément coulissant (222) vers une position de libération après la fin de l'opération de compression ;
déplacer le produit en forme de boyau comprimé en direction du dispositif de division en portions et de coupe (300) par le poinçon de presse de l'unité presse (200) ;
séparer des portions individuelles du produit en forme de boyau comprimé par le dispositif de division en portions et de coupe (300).

12. Procédé selon la revendication 11,
dans lequel le logement de réception (150) pour l'insertion du produit en forme de boyau se trouve dans une position de réception.

13. Procédé selon la revendication 12,
dans lequel le logement de réception (150) est déplacé dans une position de coupe après l'insertion d'un produit en forme de boyau.

14. Procédé selon la revendication 11,
contenant en outre l'étape consistant à : faire avancer par portions le produit en forme de boyau comprimé par le poinçon de presse (210) après la fin de l'opération de compression.

15. Procédé selon la revendication 11,
dans lequel la machine à diviser en portions (P) contient un dispositif de transport (400) pour évacuer les portions individuelles séparées du produit en forme de boyau ;
contenant en outre l'étape consistant à : entraîner de manière commandée l'unité de transport (400) pour produire des portions individuelles ou des groupes de portions individuelles.
